# EUROPÄISCHE PATENTSCHRIFT

(11) **EP 3 434 089 B1**
(45) Veröffentlichungstag und Bekanntmachung des Hinweises auf die Patenterteilung: **25.11.2020**
(21) Anmeldenummer: 18183268.4
(22) Anmeldetag: 12.07.2018
(51) Int. Cl.: A01B 73/04, A01B 29/06, A01B 63/22, A01B 63/24

(54) **LANDWIRTSCHAFTLICHE BODENBEARBEITUNGSMASCHINE**
AGRICULTURAL SOIL CULTIVATION MACHINE
MACHINE AGRICOLE DE TRAITEMENT DU SOL

(30) Priorität: 24.07.2017 DE 102017116632
(43) Veröffentlichungstag der Anmeldung: 30.01.2019
(73) Patentinhaber: Horsch Maschinen GmbH, 92421 Schwandorf (DE)
(72) Erfinder: HORSCH, Philipp, 92421 Schwandorf (DE)
(74) Vertreter: Benninger, Johannes

(56) Entgegenhaltungen:
- EP-A1- 2 868 180
- KR-A- 20110 126 405
- US-A- 4 655 296
- US-A1- 2006 065 413
- US-A1- 2011 284 253
- US-A1- 2015 020 718

## Beschreibung

Die vorliegende Erfindung betrifft eine landwirtschaftliche Bodenbearbeitungsmaschine mit den Merkmalen des unabhängigen Anspruchs 1.

Aus dem Stand der Technik ist eine große Vielzahl verschiedenster landwirtschaftlicher Maschinen zur Bodenbearbeitung und/oder zur Aussaat bekannt. Nicht nur hinsichtlich der Eingriffswerkzeuge herrscht eine sehr große Variantenvielfalt; auch die Baugrößen können sehr stark variieren, so dass derartige Maschinen mitunter große Arbeitsbreiten aufweisen können, was in aller Regel Schwenk- und Faltmechanismen erfordert, um eine Transportfähigkeit auf öffentlichen Straßen gewährleisten zu können.

Eine häufig verwendete Bauart solcher Geräte, die mittels einer Zugmaschine über eine zu bearbeitende Ackerfläche gezogen werden, umfasst einen angehängten Rahmen mit eigenem Fahrwerk und großer Arbeitsbreite. Solche Bodenbearbeitungsmaschinen können bspw. mit Lockerungs- und/oder Schneidwerkzeugen, bspw. als sog. Kurzscheiben- oder Zinkeneggen oder Grubber oder dergl. ausgebildet sein. Derartige Bodenbearbeitungsmaschinen können zudem mit Säkombinationen wie Säschare und/oder Düngerstreueinrichtungen bzw. Düngerscharen ausgestattet sein. Auch können die Arbeitswerkzeuge jeweils kombiniert werden, so dass bspw. eine Bodenbearbeitungsmaschine sich im Wesentlichen aus einer Kurzscheibenegge und aus Säscharen zusammensetzt. Zum Zwecke des Transport der Maschine können normalerweise seitlich an einem Hauptrahmen angelenkte Teile ihres Rahmens verschwenkt werden, so dass die Baubreite der Maschine auf ein für die Straßenfahrt zulässiges Maß reduziert werden kann.

Um eine gewünschte Arbeitstiefe der Arbeitswerkzeuge bei einer Feldfahrt einstellen zu können und/oder um diese Arbeitstiefe bedarfsweise weitgehend konstant zu halten, ist es bei aus dem Stand der Technik bekannten Bodenbearbeitungsmaschinen teilweise vorgesehen, die jeweilige Bodenbearbeitungsmaschine mit verschiedensten Abstützeinrichtungen, welche an deren vorderen und deren hinterem Ende angebracht sind, zu versehen. Die Abstützeinrichtungen können hierbei vorzugsweise als Stützräder oder als sog. Packer ausgebildet sein und insbesondere Rollen, Walzen, Reifen oder dergl. umfassen. Die Abstützeinrichtungen können in der Regel mittels Stellglieder, bspw. in Form von hydraulisch arbeitenden Zylindern in Bezug auf den Rahmen der Bodenbearbeitungsmaschine bzw. in Bezug auf die Arbeitswerkzeuge verschwenkt werden, wodurch jeweils die Arbeitstiefe solcher landwirtschaftlichen Bodenbearbeitungsmaschinen definiert werden kann.

Eine landwirtschaftliche Maschine mit mehreren gegeneinander verschwenkbaren Maschinenabschnitten geht aus der EP 2 868 180 A1 hervor. Die hier beschriebene Maschine weist quer zur Fahrtrichtung fünf Maschinenabschnitte auf, an denen jeweils Arbeitswerkzeuge in Form von Schneidscheiben und an deren rückwärtigen Enden jeweils Packerwalzen bzw. Packerrollen angebracht sind. Zur Verstellung der Arbeitstiefe der Arbeitswerkzeuge bzw. der landwirtschaftlichen Maschine werden die Packerwalzen jeweils mittels Hydraulikzylinder über quer zur Fahrtrichtung orientierte Achsen verschwenkt. Denkbar wäre auch das jeweilige Verschwenken der Arbeitswerkzeuge, was jedoch insbesondere bei als Scheibeneggen ausgeführten Maschinen den Nachteil zeigt, dass sich durch eine Verdrehung der Scheibenachsen gegenüber einer Arbeitsrichtung der jeweilige Eingriffswinkel zur Bodenfläche verändert, wodurch wiederum die Arbeitsqualität in Abhängigkeit von der jeweiligen Arbeitstiefe sich verändert, und dass mehr bzw. weniger Fläche bearbeitet wird als dies unter Umständen beabsichtigt ist.

Die durch die EP 2 868 180 offenbarte Maschine besitzt jeweils vorne an den Seitenteilen links und rechts zusätzliche Frontstützräder, deren Positionen bei einer Verstellung der Arbeitstiefe entsprechend anzupassen sind, und die ebenfalls mit einem hierfür geeigneten Stellzylinder ausgestattet sind. Soll die mit der Maschine zu erzielende Arbeitstiefe verstellt werden, so müssen jeweils die Verfahr- bzw. Stellwege aller Hydraulikzylinder auf ein gewünschtes Maß begrenzt werden, was jedoch bei großen Maschinen mit entsprechend vielen Zylindern mitunter sehr zeitaufwendig sein kann, so dass eine schnelle Anpassung der Arbeitstiefe nicht möglich ist. Darüber hinaus sind derartige Zylinder relativ kostenintensiv und benötigen nicht nur eine leistungsfähige Hydraulikversorgung des Zugfahrzeuges, sondern darüber hinaus eine vergleichsweise kostenintensive Steuerung und ein umfangreiches Netz an Zuleitungen, um jeweils in der benötigten Weise angesteuert werden zu können.

Um die Handhabung derartiger Maschinen zu vereinfachen, ist es aus dem Stand der Technik bekannt, die mittels hydraulischer Zylinder verstellbaren Stützräder der Seitenteile über Koppelstangen mit den höhenverstellbaren Aufhängungen der jeweiligen Packer desselben Seitenteils zu verbinden bzw. zu koppeln. Eine solche Konfiguration findet sich bspw. bei einer Bodenbearbeitungsmaschine, wie sie durch die DE 10 2008 024 279 A1 offenbart ist.

Bei Maschinen mit sog. zweigeteiltem Packer, d.h. bei Maschinen, an denen zwar an den Seitenteilen jeweils Packerwalzen angeordnet sind, an den Mittelsegmenten jedoch nicht, besteht die generelle Einschränkung hinsichtlich der damit realisierbaren Arbeitsbreiten, da für einen Straßentransport die Seitenteile mitsamt den daran angelenkten Packerwalzen senkrecht zu verschwenken sind. Aufgrund einer derzeit für Transporte auf öffentlichen Straßen im Bereich der Europäischen Union geltenden Einschränkung auf eine maximal zulässige Transporthöhe von vier Metern ist somit auch die Arbeitsbreite solcher Maschinen beschränkt. Sollen größere Arbeitsbreiten realisiert werden, muss auch am Mittelsegment eine Packerwalze mit angebaut sein, so dass die Packerwalze insgesamt drei- oder mehrteilig aufgebaut ist. Eine solche Konfiguration findet sich zwar bei der Bodenbearbeitungsmaschine gemäß DE 10 2008 024 279 A1, doch sind an der mittleren Packerwalze wiederum zwei Stellzylinder angebracht, um die Arbeitstiefe dieser Packerwalze separat verstellen zu können, da für diese keine Bewegungsübertragung mittels Koppelstangen von den vorderen Stützrädern vorgesehen ist.

Eine weitere Ausgestaltungsvariante einer mit Scheibeneggen ausgestatteten landwirtschaftlichen Bodenbearbeitungsmaschine geht aus der DE 10 2015 116 433 A1 hervor. Bei dieser Maschine ist sowohl für die Tiefenverstellung von heckseitigen Packerwalzen als auch zur Tiefenverstellung von zu beiden Seiten der Maschine paarweise angeordneten Frontstützräder jeweils wenigstens ein separater hydraulischer Stellzylinder vorgesehen, wobei den Zylindern für die Packerwalzen ein separater Kolben zugeordnet ist, der so ausgelegt ist, dass eine Tiefenverstellung zwischen den Frontstützrändern und den Packerwalzen gezielt und in gewissen Grenzen unabhängig voneinander ausgeführt werden kann. Auf diese Weise können bspw. die vorderen oder die hinteren Scheiben der Scheibenegge für tieferen oder flacheren Bodeneingriff eingestellt werden, was Auswirkungen auf von den Scheibeneggen erzeugte Seitenkräfte auf die landwirtschaftliche Maschine bei deren Feldfahrt hat. Allerdings werden auch für eine derartige Ausgestaltung wiederum mehrere Stellzylinder benötigt, was die oben bereits beschriebenen Nachteile mit sich bringt.

Ein weiteres derartiges System zur Tiefenverstellung einer landwirtschaftlichen Bodenbearbeitungsmaschine geht aus der AU 2014 265 109 A1 hervor.

Eine weitere Ausführungsform einer landwirtschaftlichen Bodenbearbeitungsmaschine geht aus der US 4 655 296 A1 hervor. Die gezeigte Bodenbearbeitungsmaschine zeigt einen Mittelrahmen, von welchem sich seitlich jeweils zwei Seitenrahmen erstrecken. Die Seitenrahmen sind am Mittelrahmen über diverse Gelenkverbindungen verschwenkbar verbunden, wobei zum Verschwenken der Seitenrahmen gegenüber dem Mittelrahmen jeweils Zylinder vorgesehen sind. Darüber hinaus sind am Seitenrahmen jeweils Bodenbearbeitungswerkzeuge sowie vorderseitig Stützräder vorgesehen. Zudem sind den Seitenrahmen jeweils höhenverstellbare Transporträder zugeordnet.

Eine weitere Ausführungsform einer landwirtschaftlichen Bodenbearbeitungsmaschine geht aus der US 2006/0065413 A1 hervor. Die Bodenbearbeitungsmaschine umfasst einen Mittelrahmen mit Bodenbearbeitungswerkzeugen sowie rückseitig angeordneten Transporträdern. Am Mittelrahmen sind seitlich jeweils Seitenrahmen mit weiteren Bodenbearbeitungswerkzeugen montiert, welche Seitenrahmen am Mittelrahmen mittels Gelenkverbindungen verbunden sind. Insbesondere sind die Seitenrahmen gegenüber den Mittelrahmen über die Gelenkverbindungen verschwenkbar ausgebildet.

Eine weitere Ausführungsform einer landwirtschaftlichen Bodenbearbeitungsmaschine geht aus der US 2011/0284253 A1 hervor. Die Bodenbearbeitungsmaschine umfasst einen Mittelrahmen sowie Seitenrahmen. Die Seitenrahmen sind mittels Aktoren gegenüber dem Mittelrahmen verschwenkbar ausgebildet. Die Bodenbearbeitungsmaschine umfasst weiter Packerwalzen, die über einen Träger und Aktoren jeweils an einer Rückseite der Rahmen angeordnet sind. Die vorderseitig angebrachten Stützräder sind jeweils über eine Parallelogrammaufhängung am Mittelrahmen und an den Seitenrahmen vorgesehen.

Eine weitere Ausführungsform einer landwirtschaftlichen Bodenbearbeitungsmaschine geht aus der US 2015/0020718 A1 hervor, welche einen Mittelrahmen sowie Seitenrahmen umfasst. Die Seitenrahmen sind gegenüber dem Mittelrahmen verschwenkbar ausgebildet, wobei das Verschwenken der Seitenrahmen gegenüber dem Mittelrahmen mittels Aktoren erfolgt. Die Seitenrahmen sind zudem mit Packerwalzen ausgestattet, die über die Seitenrahmen mit verschwenkt werden. Die Seitenrahmen weisen vorderseitig Stützräder auf, die jeweils über einen Träger am Seitenrahmen gelagert sind. Das Verschwenken der Stützräder erfolgt mittels weiterer Aktoren.

Angesichts der teilweise aufwendigen Ausstattungen der aus dem Stand der Technik bekannten Bodenbearbeitungsmaschinen mit einer Vielzahl von separat betätigbaren und/oder ansteuerbaren Verstelleinrichtungen zur Höheneinstellung der Bodenbearbeitungswerkzeuge und/oder der gesamten Maschine, die in aller Regel durch Hydraulikzylinder gebildet sind, kann es als ein Hauptziel der vorliegenden Erfindungen angesehen werden, die Handhabung einer solchen landwirtschaftlichen Maschine, insbesondere bei deren Arbeitstiefenanpassung, wesentlich zu vereinfachen sowie die Anzahl an benötigten Verstellkomponenten deutlich zu reduzieren, vorzugsweise auf ein zur Sicherstellung der gewünschten Funktionalitäten notwendiges Minimum.

Diese genannten Ziele der Erfindung werden mit dem Gegenstand des unabhängigen Anspruchs 1 erreicht. Merkmale vorteilhafter Weiterbildungen der Erfindung ergeben sich aus den abhängigen Ansprüchen.

Zur Erreichung der genannten Ziele der Erfindung schlägt die Erfindung eine landwirtschaftliche Bodenbearbeitungsmaschine vor, die zur Bodenbearbeitung und/oder zum Ausbringen von insbesondere granulatartigem Verteilgut wie Dünger und/oder Saagut vorgesehen sein kann. Denkbar ist jedoch auch eine Kombination einer Bodenbearbeitungsmaschine mit Ausbringvorrichtung zur Ausbringung von flüssigem Dünger. Die erfindungsgemäße landwirtschaftliche Bodenbearbeitungsmaschine umfasst mehrere miteinander gekoppelte Funktionselemente, die einerseits ihre Funktion bei einem bestimmungsgemäßen Einsatz auf landwirtschaftlichen Flächen sicherstellen, die andererseits jedoch auch einen Straßentransport der Maschine ermöglichen, was einen Klapp- oder Faltmechanismus erfordert. So umfasst die landwirtschaftliche Bodenbearbeitungsmaschine einen Mittelteil, der zumindest aus einem Mittelrahmen und einer damit frontseitig verbundenen Zugvorrichtung beispielsweise in Form einer Zugdeichsel zur Koppelung an einer landwirtschaftlichen Zugmaschine o. dgl. ziehendem Fahrzeug gebildet ist. Außerdem kann an diesem Mittelteil ein vorzugsweise heckseitiges oder in einem hinteren Bereich angeordnetes Fahrwerk befestigt oder gelagert sein. Ein Teil des Fahrwerks kann beispielsweise durch höhenverstellbare Heckräder, die am hinteren Ende der Maschine über einen höhenverstellbaren Auslegerarm am Mittelrahmen angelegt sein können, gebildet sein. Die beiden Heckräder können hierbei einen Abstand voneinander aufweisen, der weniger als das für einen Transport auf öffentlichen Straßen zulässige Maß beträgt, typischerweise also weniger als drei Meter.

Darüber hinaus können in einer Option dem Mittelteil vorzugsweise mehrere am Mittelrahmen gehaltene und/oder gelagerte Bodenbearbeitungswerkzeuge in Gestalt von Lockerungs- und/oder Schneidwerkzeugen wie etwa Kurzscheiben- oder Zinkeneggen, Grubberzinken oder dergl. zugeordnet sein. Eine solche Option ist jedoch keinesfalls zwingend, denn es sind auch Maschinen möglich, deren Mittelteil keine solchen Bodenbearbeitungswerkzeuge trägt oder umfasst.

Die Zugvorrichtung und das Fahrwerk können insbesondere jeweils mittels in etwa quer zu einer Fahrrichtung der Bodenbearbeitungsmaschine angebrachter Schwenkachsen schwenkbar zum Mittelteil bzw. zu dessen Mittelrahmen angebracht und dort gelagert sein. Weiterhin kann der Mittelteil wahlweise mit ihm zugeordneten und/oder dort heckseitig gelagerten hinteren rotierenden Abstützeinrichtungen ausgestattet sein, womit insbesondere Packerräder, Packerwalzen, Packerwalzenpaare oder ähnliche rotierende Bodenverdichtungselemente gemeint sein können, die bei nach oben gehobenen hinteren Fahrwerksrädern gleichzeitig für die heckseitige Abstützung der gesamten Maschine bei ihrem Feldeinsatz sorgen. Es sind aber auch Ausführungsvarianten denkbar, bei denen am Mittelteil keine solchen hinteren rotierenden Abstützeinrichtungen bzw. Packerräder, Packerwalzen o. dgl. Verdichtungseinrichtungen vorhanden sind, sondern lediglich an den schwenkbaren Seitenflügeln, wie dies nachfolgend noch detaillierter erläutert wird.

Dem Mittelteil ist darüber hinaus wenigstens ein linker Seitenflügel und ein rechter Seitenflügel zugeordnet, wobei jeder dieser Seitenflügel jeweils aus einem Seitenrahmen gebildet ist, der um eine horizontale oder schräg im Raum verlaufende Drehachse schwenkbar mit dem Mittelrahmen verbunden ist. An jedem dieser schwenk- oder klappbaren Seitenrahmen sind insbesondere beabstandet zueinander mehrere Bodenbearbeitungswerkzeuge angebracht, bspw. in hintereinander angeordneten Reihen. Die Seitenflügel sind somit an den linken und rechten Längsseiten des Mittelteils schwenkbar gehalten, so dass sie bei einer Feldfahrt zur Erzielung einer großen Arbeitsbreit in eine horizontale Lage verschwenkt und die an den Seitenrahmen der Seitenflügel angeordneten Bodenbearbeitungswerkzeuge in den Eingriff mit dem zu bearbeitenden Boden gelangen, während sie bei einer Straßenfahrt in etwa vertikal nach oben verschwenkt werden können, typischerweise um einen Schwenkwinkel von etwa 90 Grad.

Weiterhin befinden sich an den jeweiligen vorderen Enden des linken Seitenflügels sowie des rechten Seitenflügels vordere Stützräder, die bei einer Feldfahrt der Maschine für die Abstützung der Seitenflügel und damit auch des Mittelteils sowie für eine Variation der Arbeitstiefe durch Anheben oder Absenken der Stützräder sorgen können. Zu diesem Zweck ist jedes der wenigstens zwei Stützräder über ein jeweiliges Gelenk mit in etwa quer zur Fahrrichtung liegender, insbesondere horizontaler Schwenkachse schwenkbeweglich an einer Frontseite des jeweiligen Seitenflügels angeordnet und dort höhenverstellbar gelagert. An den jeweiligen hinteren Enden des linken Seitenflügels und des rechten Seitenflügels befinden sich - entsprechend der Konfiguration des Mittelteils - die hier so genannten hinteren rotierenden Abstützeinrichtungen, die über jeweils ein Gelenk mit in etwa quer zur Fahrtrichtung liegenden, insbesondere horizontalen Schwenkachsen schwenkbeweglich an den Rückseiten der schwenkbaren Seitenflügel angeordnet sind. Mit diesen sog. hinteren rotierenden Abstützeinrichtungen können wiederum insbesondere Packerräder, Packerwalzen, Packerwalzenpaare oder ähnliche rotierende Bodenverdichtungselemente gemeint sein, wobei die rotierenden Abstützeinrichtungen oder Packerwalzen der linken und rechten Seitenflügel insbesondere mit entsprechenden rotierenden Abstützeinrichtungen oder Packerwalzen des Mittelteils - sofern dort vorhanden - fluchten können, so dass sie bei einem bestimmungsgemäßen Einsatz auf einer landwirtschaftlichen Nutzfläche eine annähernd über die gesamte Arbeitsbreite der Maschine reichende Walzenanordnung bzw. Walzenpaaranordnung - typischerweise in Tandemanordnung - bilden können.

Die beschriebene Anordnung verdeutlicht das Layout der Maschine, bei der die Seitenflügel mitsamt den frontseitig daran angeordneten Stützrädern sowie mit den heckseitig daran angeordneten rotierenden Abstützeinrichtungen um in etwa parallel zur Fahrtrichtung der Maschine liegende horizontale oder schräg im Raum stehende Schwenkachsen nach oben verschwenkt werden können, bspw. in eine vertikale Lage, so dass für eine Straßenfahrt der Maschine ein ausreichend kompakter Faltzustand herstellbar ist.

Die vorliegende Erfindung sieht bei der hier definierten landwirtschaftlichen Bodenbearbeitungsmaschine vor, dass die in optionaler Ausführungsvariante dem Mittelteil zugeordneten und dort gelagerten hinteren rotierenden Abstützeinrichtungen mit den dem linken Seitenflügel zugeordneten und/oder den dem rechten Seitenflügel zugeordneten jeweiligen hinteren rotierenden Abstützeinrichtungen koppelbar sind.

Wenn nachfolgend von koppelbaren Abstützeinrichtungen die Rede ist, so soll damit auch gemeint sein bzw. umfasst sein, dass jeweils die Rahmenabschnitte der rotierenden Abstützeinrichtungen miteinander gekoppelt sind/werden bzw. koppelbar sind. Insbesondere soll umfasst sein, dass der Rahmenabschnitt der dem Mittelteil zugeordneten und dort gelagerten hinteren rotierenden Abstützeinrichtung jeweils mit den Rahmenabschnitt der jeweils rotierenden Abstützeinrichtung des linken Seitenflügels und des rechten Seitenflügels koppelbar ist. Die rotierenden Abstützeinrichtung, gebildet etwa durch Packerwalzen, sind normalerweise in diesen schwenkbaren Rahmenabschnitten drehbar gelagert, so dass es sinnvoll ist, nicht die rotierenden Abstützeinrichtung selbst und unmittelbar miteinander zu koppeln, sondern die jeweiligen Rahmenabschnitte, in denen die rotierenden Abstützeinrichtungen drehbar gelagert sind.

Wahlweise kann zudem vorgesehen sein, dass die in optionaler Ausführungsvariante dem Mittelteil zugeordneten und dort gelagerten hinteren rotierenden Abstützeinrichtungen mit den dem linken Seitenflügel zugeordneten und/oder den dem rechten Seitenflügel zugeordneten jeweiligen hinteren rotierenden Abstützeinrichtungen nicht nur koppelbar, sondern auch in einer vorzugsweise annähernd mit ihren jeweiligen Drehachsen fluchtenden Ausrichtung zueinander verriegelbar sind. Im Interesse einer Minimierung der für die Verstellung und Tiefeneinstellung der Bodenbearbeitungswerkzeuge bei der erfindungsgemäßen landwirtschaftlichen Bodenbearbeitungsmaschine benötigten Aktoren ist es sinnvoll, einige der in Feldfahrt mehrfach vorhandenen Elemente zu koppeln. Da bei heruntergeklappten Seitenflügeln die an deren Heckbereichen angeordneten Abstützeinrichtungen bzw. Packerelemente mehrfach vorhanden sind und eine über die gesamte Arbeitsbreite der Maschine reichende unterbrochene bzw. mehrteilige Packerwalze bilden, können bei deren mechanischer Koppelung bzw. Verriegelung untereinander Stellelemente wie bspw. hyraulisch arbeitende Stellzylinder eingespart werden, da mit einer Höheneinstellung an nur einer Seite oder am Mittelteil die übrigen Bereiche aufgrund der gekoppelten Abstützeinrichtungen mitverstellt, mitabgesenkt oder mitgehoben werden können. Somit ist es möglich, die zur Tiefenverstellung benötigten Hydraulikzylinder auf ein Minimum zu reduzieren, so dass bspw. nur noch an den Frontstützrädern entsprechende Hydraulik-oder Stellzylinder benötigt werden, ggf. sogar an nur einem der Frontstützräder. Der Unterschied und erfinderische Fortschritt besteht somit in erster Linie darin, dass zusätzlich zu den äußeren Packerwalzen oder Abstützeinrichtungen auch die optionalerweise am Mittelsegment befindlichen Packerwalzen oder Abstützeinrichtungen mit verbunden bzw. untereinander mechanisch gekoppelt und/oder untereinander verriegelt werden, so dass zwar ihre Schwenkbewegungen nicht blockiert sind, aber über die gesamte Arbeitsbreite synchron ausgeführt werden müssen, womit aber andererseits auch durch eine Verstellung bspw. nur eines Zylinders eine Verstellung aller Packerwalzen oder rotierenden hinteren Abstützeinrichtungen ermöglicht ist, ohne dass hierfür zusätzliche Einstellelemente oder Verstellelemente oder Aktoren o. dgl. benötigt werden.

Die erfindungsgemäße Bodenbearbeitungsmaschine kann weiterhin in einer Weise ausgestaltet sein, dass sich die dem linken Seitenflügel zugeordneten und/oder die dem rechten Seitenflügel zugeordneten jeweiligen hinteren rotierenden Abstützeinrichtungen bzw. Packerwalzen oder Packerwalzenpaare im gekoppelten und/oder miteinander verriegelten Zustand - d.h. bspw. bei miteinander gekoppelten Rahmenabschnitten der jeweiligen Packerwalzen oder Packerwalzenpaare, in denen diese drehbar gelagert sind - am Mittelteil und/oder an einer Aufhängung der dem Mittelteil zugeordneten und dort gelagerten hinteren rotierenden Abstützeinrichtungen abstützen.

Um dies zu erreichen, kann bspw. vorgesehen sein, dass die Aufhängungen oder Halterungen der jeweils miteinander koppelbaren und/oder miteinander verriegelbaren hinteren rotierenden Abstützeinrichtungen, insbesondere der jeweils miteinander koppelbaren und/oder miteinander verriegelbaren Rahmenabschnitte der hinteren rotierenden Abstützeinrichtungen, jeweils mittels steuerbarer Koppelbolzen oder dergl. Koppelelemente miteinander in Eingriff bringbar sind bzw. gebracht werden können.

Diese Koppelbolzen oder Koppelelemente können bspw. durch elektromotorischen, hydraulischen oder pneumatischen Antrieb verstellbare Linearstellelemente sein, die in entsprechende Verriegelungsaufnahmen eingreifen können, so dass eine zentrale Betätigungsmöglichkeit vom Zugfahrzeug gegeben ist. In einer einfachen Ausführungsvariante kann jedoch auch vorgesehen sein, dass sich die Bolzen der Seitenflügel jeweils auf linke und rechte Anschlagflächen oder Auflageflächen des Mittelteils legen und dort abstützen können, so dass die hinteren rotierenden Abstützeinrichtungen oder Packerwalzen der beiden Seitenflügel jedenfalls nicht unterhalb des Niveaus der hinteren rotierenden Abstützeinrichtungen oder Packerwalzen des Mittelteils absinken können, wodurch ein annähernd einheitliches Niveau der hinteren rotierenden Abstützeinrichtungen oder Packerwalzen über die gesamte Arbeitsbreite der Maschine sichergestellt werden kann.

Insbesondere kann die Koppeleinrichtung beispielsweise durch einen an einem seitlichen Rahmenteil eines Aufhängungsrahmens für die Packerwalzen befindlichen Bolzen gebildet sein, der mit einer entsprechenden Aufnahme eines benachbarten Rahmenteils für eine benachbarte Packerwalze zusammenwirkt, wodurch die benachbarten Packerwalzen bzw. Abstützeinrichtungen in fluchtender oder zumindest in ungefähr oder annähernd fluchtender Anordnung miteinander verriegelbar sind. Insbesondere kann der Bolzen jeweils am Seitenflügel verankert sein und für dessen Abstützung am Mittelteil sorgen, so dass die Packerwalzen des Seitenflügels nicht unterhalb des Niveaus der Packerwalzen des Mittelteils abgesenkt werden können.

Durch eine solche mechanische Verriegelung mittels der Koppeleinrichtung können Stellelemente wie bspw. hydraulisch arbeitende Stellzylinder eingespart werden, da mit einer Höheneinstellung an nur einer Seite oder am Mittelteil die übrigen Bereiche aufgrund der gekoppelten Abstützeinrichtungen mitverstellt, mitabgesenkt oder mitgehoben werden können. Somit ist es möglich, die zur Tiefenverstellung benötigten Hydraulikzylinder auf ein Minimum zu reduzieren, so dass bspw. nur noch an den Frontstützrädern entsprechende Hydraulik- oder Stellzylinder benötigt werden. Zusätzlich zu den äußeren Packerwalzen oder Abstützeinrichtungen können auf diese Weise auch die am Mittelsegment befindlichen Packerwalzen oder Abstützeinrichtungen mit verbunden bzw. untereinander mechanisch gekoppelt und/oder untereinander verriegelt werden, so dass zwar ihre Schwenkbewegungen nicht blockiert sind, aber über die gesamte Arbeitsbreite der Maschine synchron ausgeführt werden, womit aber andererseits auch durch eine Verstellung bspw. nur eines Zylinders eine Verstellung aller Packerwalzen oder rotierenden hinteren Abstützeinrichtungen ermöglicht ist, ohne dass hierfür zusätzliche Einstellelemente oder Verstellelemente oder Aktoren o. dgl. benötigt werden.

Die Bolzen der Koppeleinrichtung können wahlweise steuerbar bzw. fernsteuerbar sein und bspw. durch elektromotorischen, hydraulischen oder pneumatischen Antrieb verstellbare Linearstellelemente sein, die in entsprechende Verriegelungsaufnahmen eingreifen können, so dass eine zentrale Betätigungsmöglichkeit vom Zugfahrzeug gegeben ist.

Wie oben bereits erwähnt, können die Stützräder höhenverstellbar ausgeführt sein, was insbesondere zur Einstellung der Eingriffstiefe der nicht oder nur mit größerem Aufwand in ihrer Einbauhöhe gegenüber den tragenden Mittelrahmen und Seitenrahmen verstellbaren Bodenbearbeitungswerkzeuge im Boden sinnvoll ist. Gleiches kann grundsätzlich für die hinteren rotierenden Abstützeinrichtungen gelten, die gleichzeitig einen Teil eines oben erwähnten Fahrwerks der Maschine bilden können. Zum Zwecke der Höheneinstellung ist jedem Stützrad und/oder der hinteren rotierenden Abstützeinrichtung jedes Seitenflügels jeweils mindestens ein Aktor zur Höheneinstellung und/oder Verschwenkung gegenüber dem jeweiligen Seitenrahmen jedes der beiden Seitenflügel zugeordnet. Ein solcher Aktor kann bspw. ein geeigneter Hydraulikzylinder o. dgl. sein, der an einem Ausleger eines schwenkbaren Hebels angelenkt ist, so dass das daran gelagerte Stützrad oder die an einem solchen schwenkbaren Hebel angelenkte rotierende Abstützeinrichtung mittels des verstellbaren Aktors in der Höhe verstellt werden kann.

Außerdem kann bei der erfindungsgemäßen landwirtschaftlichen Bodenbearbeitungsmaschine wahlweise vorgesehen sein, dass eine schwenkbewegliche Aufhängung jedes der wenigstens zwei Stützräder über eine separate Koppeleinrichtung mit einer schwenkbeweglichen Aufhängung der dem jeweiligen Seitenrahmen zugeordneten hinteren rotierenden Abstützeinrichtung verbunden ist. Diese Koppeleinrichtung soll bspw. mittels einer geeigneten Koppelstange oder einer sonstigen mechanischen Verbindung jegliche vom jeweiligen Aktor und/oder von Bodenunebenheiten und/oder von Belastungsänderungen induzierte Schwenkbewegungen des jeweiligen Stützrades auf die hintere rotierende Abstützeinrichtung und/oder von dieser umgekehrt auf das Stützrad übertragen. Jeder Seitenflügel verfügt damit über eine Funktionseinheit, bestehend aus miteinander gekoppeltem Stützrad und hinterer Abstützeinrichtung. Grundsätzlich kann es auch ausreichen, wenn nur ein Stützrad über einen Aktor zur Höhenverstellung verfügt, gebildet bspw. durch einen Hydraulikzylinder, da durch die Koppelung der übrigen Elemente eine gleichzeitige Verstellung des jeweils anderen Stützrades sichergestellt werden kann.

Wenn nun eine Verstellung oder Höheneinstellung der Maschine durch Verstellung der Höhe der vorderen Stützräder mittels der Koppeleinrichtungen auf die hinteren rotierenden Abstützeinrichtungen übertragen wird, so sind diese untereinander in der oben beschriebenen Weise verbunden und/oder verriegelt, so dass eine gleichzeitige Verstellung aller Packerwalzen, Packerräder oder rotierenden Abstützeinrichtungen mittels nur eines Aktors oder wahlweise mittels linker und rechter Aktoren erfolgen kann, ohne dass hierfür heckseitig weitere Aktoren, Zylinder oder Verstell- oder Höheneinstelleinrichtungen notwendig sind.

Wenn im vorliegenden Zusammenhang von hinteren rotierenden Abstützeinrichtungen der erfindungsgemäßen Bodenbearbeitungsmaschine die Rede ist, so können dies insbesondere heckseitig an der Maschine angeordnete und höhenverstellbar gelagerte Packerwalzen, Packerräder o. dgl. sein. Diese Packerwalzen, Packerräder, Packerrollen etc. können gleichzeitig einen Teil des Fahrwerks der Maschine bilden, weil sie sich zumindest bei Feldfahrten heckseitig darauf abstützt, während für Straßentransportfahrten ggf. zusätzliche Stützräder vorgesehen sein können, die bei einer Absenkung für eine Entlastung der heckseitigen rotierenden Abstützeinrichtungen sorgen können.

Die erwähnten Bodenbearbeitungswerkzeuge können insbesondere durch mehrreihig am Mittelrahmen und/oder an den Seitenrahmen angeordnete Sechscheiben, Grubberzinken o. dgl. Lockerungs- und/oder Zerkleinerungs- und/oder Schneidwerkzeuge gebildet sein.

Die oben erwähnte und als optionale Ausstattung zu verstehende Koppeleinrichtung kann bspw. durch eine mit Längsverstelleinrichtung ausgestattete Koppelstange und/oder einen mit Längsverstelleinrichtung ausgestatteten Koppelabschnitt zwischen der Koppelstange und zumindest einer der Aufhängungen der Stützräder und/oder der hinteren rotierenden Abstützeinrichtungen gebildet sein. Dabei ist es für die Funktion der Koppeleinrichtung wichtig, dass die Längsverstelleinrichtung einen definierten Längsverstellweg zwischen zwei definierten Endlagen vorsieht bzw. aufweist. Durch eine solche Verlängerung oder Verkürzung der verwendeten Koppelstange oder des eingesetzten Koppelabschnittes kann die Bewegung der Packerwalzen oder heckseitigen rotierenden Abstützeinrichtungen gezielt verändert werden; zudem kann auf diese Weise eine entsprechende Anpassung der vorderen bzw. der hinteren Scheiben bzw. Arbeitswerkzeuge erreicht werden, wie sie für eine Feinjustierung der Arbeitstiefe und Eingriffstiefe der Bodenbearbeitungswerkzeuge wünschenswert ist.

Die erfindungsgemäße Bodenbearbeitungsmaschine hat den besonderen Vorteil, mittels nur wenigen Stellelementen ein komfortabel nutzbares und in der Höhe einstellbares System zur Bodenbearbeitung zur Verfügung zu stellen. Gegenüber bekannten Systemen arbeitet es mit einer vergleichsweise geringen Anzahl an Stellelementen, die bspw. durch Hydraulikzylinder gebildet sein können.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt in zwei schematischen und perspektivischen Ansichten (Fig. 1A und Fig. 1B) eine Ausführungsvariante einer erfindungsgemäßen landwirtschaftlichen Bodenbearbeitungsmaschine.
Fig. 2A zeigt eine Draufsicht auf die in den Figuren 1A und 1B gezeigte Ausführungsvariante der Bodenbearbeitungsmaschine.
Fig. 2B zeigt eine schematische und perspektivische Ansicht der in den Figuren 1A, 1B und 2A gezeigten landwirtschaftlichen Bodenbearbeitungsmaschine, die für einen Straßentransport mit reduzierter Baubreite vorbereitet ist.
Fig. 3 zeigt eine perspektivische Detailansicht einer Koppeleinrichtung zur mechanischen Koppelung mehrerer Abstützeinrichtungen der Bodenbearbeitungsmaschine.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße landwirtschaftliche Bodenbearbeitungsvorrichtung oder -maschine ausgestaltet sein kann und stellen keine abschließende Begrenzung dar.

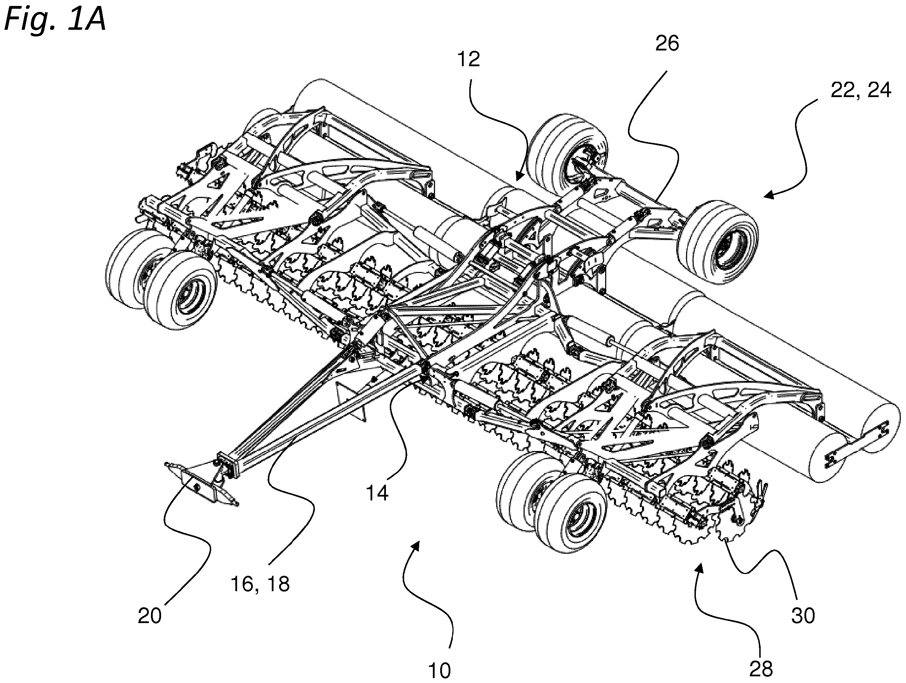

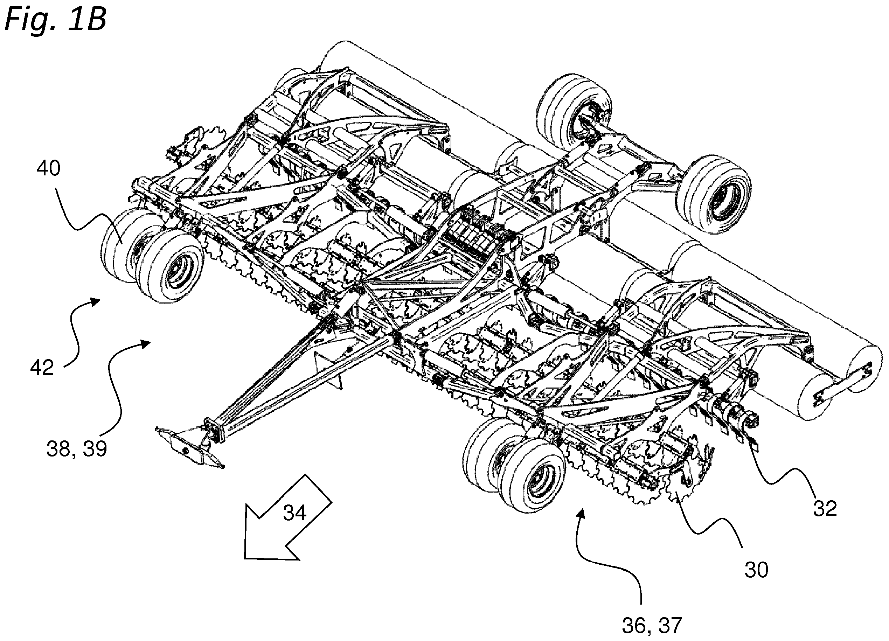

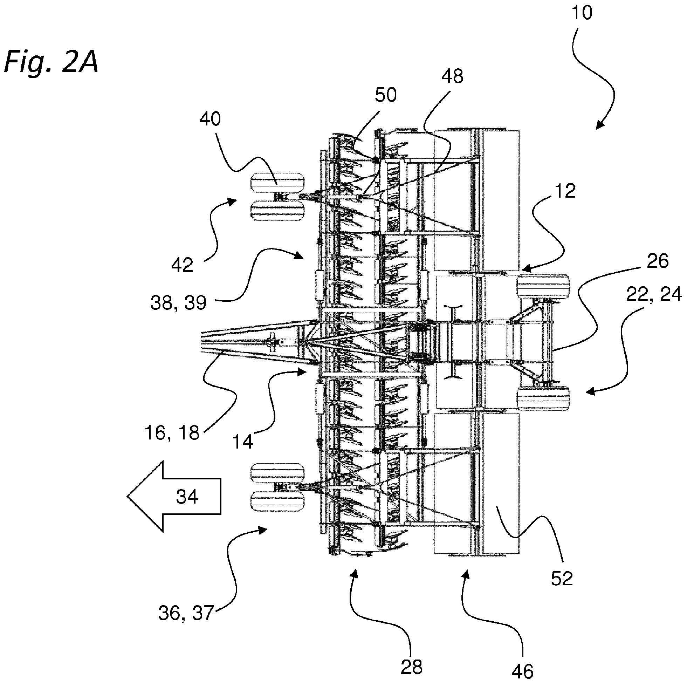

Die beiden schematischen und perspektivischen Ansichten der Fig. 1A und der Fig. 1B zeigen jeweils eine Ausführungsvariante einer erfindungsgemäßen landwirtschaftlichen Bodenbearbeitungsmaschine 10, die zudem in der Fig. 2A in einer schematischen Draufsicht gezeigt ist, was die Dimensionen der Bodenbearbeitungsmaschine 10 und deren Funktionselemente nochmals verdeutlicht. Die in den Figuren 1A bis 3 in unterschiedlichen Ansichten und Betriebszuständen gezeigte landwirtschaftliche Bodenbearbeitungsmaschine 10 dient in erster Linie der Bodenbearbeitung, kann aber in von den gezeigten Darstellungen abweichender Bauausführung und Konfiguration ebenso der Ausbringung von insbesondere granulatartigem Verteilgut wie Dünger und/oder Saagut dienen und bspw. als landwirtschaftliches Kombinationsgerät ausgebildet sein. Denkbar ist darüber hinaus auch eine Kombination der Bodenbearbeitungsmaschine 10 mit Ausbringvorrichtungen zur Ausbringung von flüssigem Dünger, was hier jedoch nicht näher gezeigt ist.

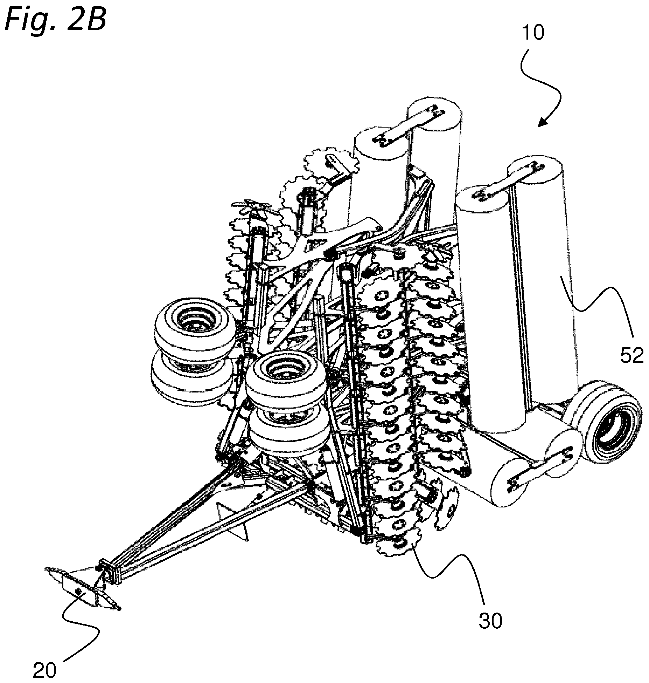

Wie es die Figuren 2A und 2B verdeutlichen, weist die landwirtschaftliche Bodenbearbeitungsmaschine 10 eine relativ große Arbeitsbreite für eine Feldfahrt auf, die deutlich mehr beträgt als die für eine Straßenfahrt gesetzlich zulässigen zweieinhalb oder maximal drei Meter Baubreite, was für Straßenfahrten einen Klapp- oder Faltmechanismus erfordert, bei dem zwei seitliche Flügel links und rechts mittels in etwa horizontalen Schwenkachsen in vertikale Richtung nach oben geschwenkt werden können, so dass Teile der Maschine 10 nach oben ragen und die Baubreite deutlich reduzieren.

Die gezeigte landwirtschaftliche Bodenbearbeitungsmaschine 10 weist einen Mittelteil 12 auf, der zumindest aus einem Mittelrahmen 14 und einer damit frontseitig verbundenen Zugvorrichtung 16 in Gestalt einer Zugdeichsel 18 zur Koppelung an einer Kupplung 20 einer hier nicht gezeigten landwirtschaftlichen Zugmaschine o. dgl. ziehendem Fahrzeug gebildet ist. Außerdem ist an dem Mittelteil 12 ein heckseitiges oder in einem hinteren Bereich angeordnetes Fahrwerk 22 befestigt oder gelagert. Ein Teil des Fahrwerks 22 ist hier gebildet durch höhenverstellbare Heckräder 24, die am hinteren Ende der Maschine 10 über einen höhenverstellbaren Auslegerarm 26 am Mittelrahmen 14 angelegt sind. Die beiden Heckräder 24 weisen einen Abstand voneinander auf, der weniger als das für einen Transport auf öffentlichen Straßen zulässige Maß beträgt, typischerweise also weniger als drei Meter (vgl. Fig. 2B).

Darüber hinaus sind dem Mittelteil 12 mehrere am Mittelrahmen 14 gehaltene und/oder gelagerte Bodenbearbeitungswerkzeuge 28 in Gestalt von Lockerungs-und/oder Schneidwerkzeugen wie etwa Kurzscheibeneggen 30 sowie Zinkeneggen 32, Grubberzinken (nicht dargestellt) oder dergl. zugeordnet. Dies ist jedoch nicht zwingend, denn der Mittelteil 12 kann wahlweise auch auf solche Bodenbearbeitungswerkzeuge 28 verzichten, während diese an den beiden Seitenflügeln 36 und 38 normalerweise zwingend vorhanden sind.

Die Zugvorrichtung 16 und das Fahrwerk 22 sind jeweils mittels in etwa quer zu einer Fahrtrichtung 34 der Bodenbearbeitungsmaschine 10 angebrachter Schwenkachsen schwenkbar zum Mittelteil 12 bzw. zu dessen Mittelrahmen 14 angebracht und dort gelagert.

Dem Mittelteil 12 ist weiterhin ein linker Seitenflügel 36 und ein rechter Seitenflügel 38 (links und rechts in Bezug auf die Fahrtrichtung 34 der Maschine 10) zugeordnet, wobei jeder dieser Seitenflügel 36 und 38 jeweils aus einem Seitenrahmen 37 bzw. 39 gebildet ist, der um eine horizontale oder schräg im Raum verlaufende Drehachse schwenkbar mit dem Mittelrahmen 14 verbunden ist. Am jeweiligen Seitenrahmen 37 und 39 sind beabstandet zueinander die oben erwähnten Bodenbearbeitungswerkzeuge 28 angebracht, die auch am Mittelrahmen 14 angebracht sind, so dass sich die Bodenbearbeitungswerkzeuge 28 in einer Richtung quer zur Fahrtrichtung 34 der Maschine 10 insbesondere über den Mittelrahmen 14 sowie die beiden Seitenrahmen 37 und 39 erstrecken.

Die Seitenflügel 36 und 38 sind somit an den linken und rechten Längsseiten des Mittelteils 14 schwenkbar gehalten, so dass sie bei einer Feldfahrt zur Erzielung einer großen Arbeitsbreit in eine horizontale Lage verschwenkt (vgl. Figuren 1A, 1B und 2A) und die an den Seitenrahmen 37 und 39 der Seitenflügel 36 und 38 angeordneten Bodenbearbeitungswerkzeuge 28 in den Eingriff mit dem zu bearbeitenden Boden gelangen, während sie bei einer Straßenfahrt in etwa vertikal nach oben verschwenkt werden können, typischerweise um einen Schwenkwinkel von etwa 90 Grad (vgl. Fig. 2B). Die Fig. 2 verdeutlicht das Layout der Maschine 10, bei der die Seitenflügel 36 und 38 mitsamt den frontseitig daran angeordneten Stützrädern 40 bzw. Stützräderpaaren 42 sowie mit den heckseitig daran angeordneten rotierenden Abstützeinrichtungen 46 um in etwa parallel zur Fahrtrichtung 34 der Maschine 10 liegende horizontale oder schräg im Raum stehende Schwenkachsen nach oben verschwenkt werden können, insbesondere in eine vertikale Lage, so dass für eine Straßenfahrt der Maschine 10 ein ausreichend kompakter Faltzustand herstellbar ist.

Weiterhin befinden sich an den jeweiligen vorderen Enden des linken Seitenflügels 36 sowie des rechten Seitenflügels 38 vordere Stützräder 40 (hier jeweils als Stützräderpaare 42 ausgebildet), die bei einer Feldfahrt der Maschine 10 für die Abstützung der Seitenflügel 36 und 38 und damit auch des Mittelteils 14 sowie für eine Variation der Arbeitstiefe durch Anheben oder Absenken der Stützräder 40 bzw. der beiden Stützräderpaare 42 links und rechts sorgen können. Zu diesem Zweck ist jedes der wenigstens zwei Stützräder 40 bzw. der im Ausführungsbeispiel gezeigten beiden Stützräderpaare 42 über ein jeweiliges Gelenk (nicht im Detail erkennbar) mit in etwa quer zur Fahrtrichtung 34 liegender, insbesondere horizontaler Schwenkachse schwenkbeweglich an einer Frontseite des jeweiligen Seitenflügels 36 bzw. 38 angeordnet und dort höhenverstellbar gelagert. An den jeweiligen hinteren Enden des linken Seitenflügels 36 und des rechten Seitenflügels 38 befinden sich sog. hintere rotierende Abstützeinrichtungen 46, die über jeweils einen Hebelarm 48 und ein Gelenk 50 mit in etwa quer zur Fahrtrichtung 34 liegenden, insbesondere horizontalen Schwenkachsen schwenkbeweglich an den Rückseiten der schwenkbaren Seitenflügel 36 und 38 angeordnet sind (vgl. Fig. 2A). Im gezeigten Ausführungsbeispiel sind die hinteren rotierenden Abstützeinrichtungen 46 jeweils durch paarweise hintereinander angeordnete Packerwalzen 52 gebildet, wobei sowohl der Mittelteil 14 als auch jeder der beiden Seitenflügel 36 und 38 jeweils ein solches Paar von Packerwalzen 52 aufweist, die in einer Richtung quer zur Fahrtrichtung 34 der landwirtschaftlichen Bodenbearbeitungsmaschine 10 jeweils miteinander fluchten.

Die vorderen Stützräder 42 sind normalerweise höhenverstellbar ausgeführt, was insbesondere zur Einstellung der Eingriffstiefe der nicht oder nur mit größerem Aufwand in ihrer Einbauhöhe gegenüber den tragenden Mittelrahmen 14 und Seitenrahmen 37 und 39 verstellbaren Bodenbearbeitungswerkzeuge 28 im Boden sinnvoll ist. Gleiches kann grundsätzlich für die hinteren rotierenden Abstützeinrichtungen 46 bzw. der Packerwalzen 52 gelten, die gleichzeitig einen Teil eines oben erwähnten Fahrwerks 22 der Maschine 10 bilden. Zum Zwecke der Höheneinstellung kann jedem Stützrad 40 bzw. jedem Stützräderpaar 42 jeweils mindestens ein Aktor in Gestalt eines Hubzylinders o. dgl. zur Höheneinstellung und/oder Verschwenkung gegenüber dem Mittelrahmen, insbesondere jedoch gegenüber dem jeweiligen Seitenrahmen 37 bzw. 39 jedes der beiden Seitenflügel 36, 38 zugeordnet sein. Außerdem könnte jedem der hinteren rotierenden Abstützeinrichtungen 46 bzw. jedem der Packerwalzenpaare 52 jedes Seitenflügels 37 bzw. 39 jeweils mindestens ein Aktor zur Höheneinstellung und/oder Verschwenkung gegenüber dem jeweiligen Seitenrahmen 37 bzw. 39 jedes der beiden Seitenflügel 36, 38 zugeordnet sein. Die Aktoren können bspw. jeweils durch einen geeigneten hydraulisch arbeitenden Hubzylinder gebildet sein, der an einem Ausleger eines schwenkbaren Hebels angelenkt ist, so dass das daran gelagerte Stützrad 42 oder die an einem solchen schwenkbaren Hebel angelenkte rotierende Abstützeinrichtung 46 mittels des verstellbaren Hubzylinders 54 in der Höhe verstellt werden kann/können.

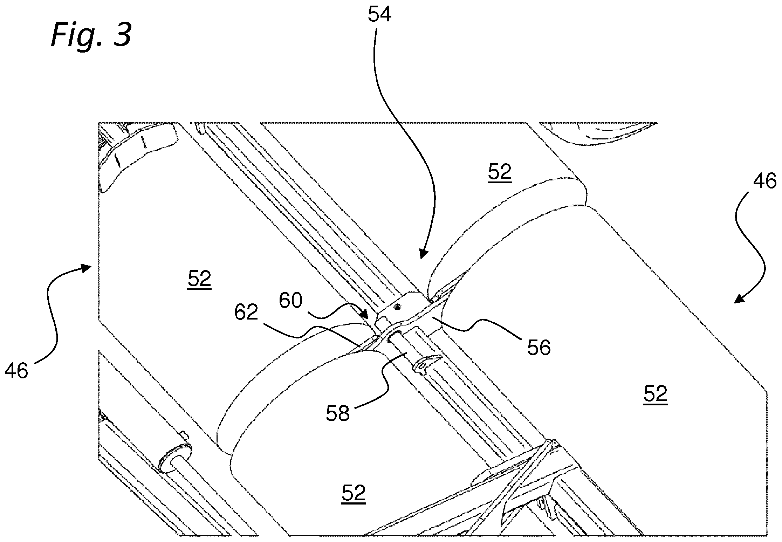

Die schematische Detaildarstellung der Fig. 3 zeigt zudem eine Koppelung der dem Mittelteil 12 zugeordneten und dort gelagerten hinteren rotierenden Abstützeinrichtungen 46 mit den dem linken Seitenflügel 36 zugeordneten und den dem rechten Seitenflügel 38 zugeordneten jeweiligen hinteren rotierenden Abstützeinrichtungen 46, wobei diese Koppelung eine annähernd mit ihren jeweiligen Drehachsen fluchtende Ausrichtung der Packerwalzen 52 zueinander und ihre optionale Verriegelung in dieser Ausrichtung vorsieht. Die Koppeleinrichtung 54 ist hier durch einen an einem seitlichen Rahmenteil 56 eines Aufhängungsrahmens für die Packerwalzen 52 befindlichen Bolzen 58 gebildet, der mit einer entsprechenden Aufnahme 60 eines benachbarten Rahmenteils 62 für eine benachbarte Packerwalze 52 zusammenwirkt, wodurch die benachbarten Packerwalzen 52 bzw. Abstützeinrichtungen 46 in fluchtender Anordnung miteinander verriegelbar sind.

Der Ausschnitt der Fig. 3 zeigt rechts unten einen Teil eines am linken Seitenflügel 36 (vgl. Fig. 1, Fig. 2) angeordneten Packerwalzenpaares 52 und links oben einen am Mittelrahmen 14 des Mittelteils 12 der Bodenbearbeitungsmaschine 10 angeordneten Packerwalzenpaares 52. Der Bolzen 58 ist somit am Seitenflügel 36 verankert und sorgt für dessen Abstützung am Mittelteil 12, so dass die Packerwalzen 52 des Seitenflügels 36 nicht unterhalb des Niveaus der Packerwalzen 52 des Mittelteils 12 abgesenkt werden können. Gleiches gilt für den hier nicht gezeigten rechten Seitenflügel, dessen Rahmen ebenfalls einen solchen Bolzen zur Abstützung am Mittelrahmen 14 aufweist.

Durch eine solche mechanische Verriegelung mittels der Koppeleinrichtung 54 können Stellelemente wie bspw. hyraulisch arbeitende Stellzylinder eingespart werden, da mit einer Höheneinstellung an nur einer Seite oder am Mittelteil 12 die übrigen Bereiche aufgrund der gekoppelten Abstützeinrichtungen 46 mitverstellt, mitabgesenkt oder mitgehoben werden können. Somit ist es möglich, die zur Tiefenverstellung benötigten Hydraulikzylinder auf ein Minimum zu reduzieren, so dass bspw. nur noch an den Frontstützrädern 40 entsprechende Hydraulik- oder Stellzylinder benötigt werden. Zusätzlich zu den äußeren Packerwalzen 52 oder Abstützeinrichtungen 46 können auf diese Weise auch die am Mittelsegment 12 befindlichen Packerwalzen 52 oder Abstützeinrichtungen 46 mit verbunden bzw. untereinander mechanisch gekoppelt und/oder untereinander verriegelt werden, so dass zwar ihre Schwenkbewegungen nicht blockiert sind, aber über die gesamte Arbeitsbreite der Maschine 10 synchron ausgeführt werden, womit aber andererseits auch durch eine Verstellung bspw. nur eines Zylinders eine Verstellung aller Packerwalzen 52 oder rotierenden hinteren Abstützeinrichtungen 46 ermöglicht ist, ohne dass hierfür zusätzliche Einstellelemente oder Verstellelemente oder Aktoren o. dgl. benötigt werden.

Die gezeigten Bolzen 58 der Koppeleinrichtung 54 können wahlweise steuerbar sein und bspw. durch elektromotorischen, hydraulischen oder pneumatischen Antrieb verstellbare Linearstellelemente sein, die in entsprechende Verriegelungsaufnahmen 60 eingreifen können, so dass eine zentrale Betätigungsmöglichkeit vom Zugfahrzeug gegeben ist.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Bodenbearbeitungsmaschine, Maschine, landwirtschaftliche Maschine, landwirtschaftlichen Bodenbearbeitungsmaschine, Bodenbearbeitungsvorrichtung, landwirtschaftliche Bodenbearbeitungsvorrichtung
- 12: Mittelteil
- 14: Mittelrahmen
- 16: Zugvorrichtung
- 18: Zugdeichsel
- 20: Kupplung
- 22: Fahrwerk
- 24: Heckrad; Heckräder
- 26: Auslegerarm
- 28: Bodenbearbeitungswerkzeuge
- 30: Kurzscheibeneggen, Scheiben
- 32: Zinkeneggen
- 34: Fahrtrichtung
- 36: Linker Seitenflügel
- 37: Linker Seitenrahmen
- 38: Rechter Seitenflügel
- 39: Rechter Seitenrahmen
- 40: Stützrad
- 42: Stützräderpaar
- 46: Abstützeinrichtung, hintere rotierende Abstützeinrichtung
- 48: Hebelarm
- 50: Gelenk
- 52: Packerwalze, Packerwalzenpaar
- 54: Koppeleinrichtung
- 56: Rahmenteil
- 58: Bolzen
- 60: Aufnahme
- 62: benachbartes Rahmenteil

## Patentansprüche

1. Landwirtschaftliche Bodenbearbeitungsmaschine (10) zur Bodenbearbeitung und/oder zum Ausbringen von Verteilgut wie Dünger und/oder Saatgut,
- mit einem Mittelteil (12), zumindest bestehend aus einem Mittelrahmen (14) und einer damit frontseitig verbundenen Zugvorrichtung (16) zur Koppelung an einer landwirtschaftlichen Zugmaschine o. dgl. ziehendem Fahrzeug,
- mit einem linken Seitenflügel (36) und einem rechten Seitenflügel (38), jeweils bestehend aus einem Seitenrahmen (37, 39), welcher Seitenrahmen (37, 39) um horizontale oder schräg im Raum verlaufende Drehachsen schwenkbar mit dem Mittelrahmen (14) verbunden ist, wobei am jeweiligen Seitenrahmen (37, 39) Bodenbearbeitungswerkzeuge (28) angebracht sind,
- mit an den jeweiligen vorderen Enden des linken Seitenflügels (36) und des rechten Seitenflügels (38) über jeweils ein Gelenk mit in etwa quer zur Fahrtrichtung (34) liegenden Schwenkachsen schwenkbeweglich angeordneten vorderen Stützrädern (40),
- mit an den jeweiligen hinteren Enden des linken Seitenflügels (36) und des rechten Seitenflügels (38) über jeweils ein Gelenk (50) mit in etwa quer zur Fahrtrichtung (34) liegenden Schwenkachsen schwenkbeweglich angeordneten hinteren rotierenden Abstützeinrichtungen (46),
**dadurch gekennzeichnet, dass** ein Rahmenabschnitt der dem Mittelteil (12) zugeordneten und dort gelagerten hinteren rotierenden Abstützeinrichtungen (46) derart ausgebildet ist, dass er mit einem Rahmenanschnitt der dem linken Seitenflügel (36) zugeordneten und/oder der dem rechten Seitenflügel (38) zugeordneten jeweiligen hinteren rotierenden Abstützeinrichtungen (46) mittels steuerbarer Koppelelemente koppelbar ist, wobei dem Stützrad (40) und/oder der hinteren rotierenden Abstützeinrichtung (46) zumindest eines Seitenflügels (36, 38) jeweils mindestens ein Aktor zur Höheneinstellung und/oder Verschwenkung gegenüber dem jeweiligen Seitenrahmen (37, 39) jedes der beiden Seitenflügel (36, 38) zugeordnet ist.

2. Bodenbearbeitungsmaschine nach Anspruch 1, bei der dem Mittelteil (12) hintere rotierende Abstützeinrichtungen (46) zugeordnet und dort gelagert sind.

3. Bodenbearbeitungsmaschine nach Anspruch 2, bei der sich die dem linken Seitenflügel (36) zugeordneten und/oder die dem rechten Seitenflügel (38) zugeordneten jeweiligen hinteren rotierenden Abstützeinrichtungen (46) im gekoppelten Zustand am Mittelteil (12) und/oder an einer Aufhängung der dem Mittelteil (12) zugeordneten und dort gelagerten hinteren rotierenden Abstützeinrichtungen abstützen.

4. Bodenbearbeitungsmaschine nach Anspruch 2 oder 3, bei der die Aufhängungen oder Halterungen der jeweils miteinander koppelbaren hinteren rotierenden Abstützeinrichtungen (46) jeweils mittels steuerbarer Koppelbolzen (58) oder dergl. Koppelelemente miteinander in Eingriff bringbar sind.

5. Bodenbearbeitungsmaschine nach einem der Ansprüche 2 bis 4, bei der die dem Mittelteil (12) zugeordneten und dort gelagerten hinteren rotierenden Abstützeinrichtungen (46) mit den dem linken Seitenflügel (36) zugeordneten und/oder den dem rechten Seitenflügel (38) zugeordneten jeweiligen hinteren rotierenden Abstützeinrichtungen (46) koppelbar und in einer annähernd mit ihren jeweiligen Drehachsen fluchtenden Ausrichtung zueinander verriegelbar sind.

6. Bodenbearbeitungsmaschine nach einem der Ansprüche 1 bis 5, bei der die rotierenden hinteren Abstützeinrichtungen (46) jeweils durch Packerwalzen (52), Packerräder o. dgl. gebildet sind.

7. Bodenbearbeitungsmaschine nach einem der Ansprüche 1 bis 6, bei der eine schwenkbewegliche Aufhängung jedes der wenigstens zwei Stützräder (40) über eine Koppeleinrichtung mit einer schwenkbeweglichen Aufhängung der dem jeweiligen Seitenrahmen (37, 39) zugeordneten hinteren rotierenden Abstützeinrichtung (46) verbunden ist, welche Koppeleinrichtung jegliche vom jeweiligen Aktor und/oder von Bodenunebenheiten und/oder von Belastungsänderungen induzierte Schwenkbewegungen des jeweiligen Stützrades (40) auf die hintere rotierende Abstützeinrichtung (46) und/oder von dieser umgekehrt auf das Stützrad (40) überträgt.

8. Bodenbearbeitungsmaschine nach Anspruch 7, bei der bei gekoppelten hinteren Abstützeinrichtungen (46) des Mittelrahmens (12) sowie der linken und rechten Seitenflügel (36, 38) jegliche vom jeweiligen Stützrad (40) auf die hintere rotierende Abstützeinrichtung (46) und/oder von dieser umgekehrt auf das Stützrad (40) übertragene Schwenkbewegung mittels der miteinander gekoppelten hinteren Abstützeinrichtungen (46) über die gesamte Maschinenbreite übertragbar sind.

9. Bodenbearbeitungsmaschine nach einem der Ansprüche 1 bis 8, bei der die Bodenbearbeitungswerkzeuge (28) durch Sechscheiben, Grubberzinken o. dgl. gebildet sind.

## Claims

1. An agricultural soil-working machine (10) used for soil tillage and/or for spreading of distribution goods, such as fertilisers and/or seeds,
- with a central part (12), consisting at least of a centre frame (14) and a towing device (16) connected thereto at the front end for the purpose of being coupled to an agricultural towing machine or the like towing vehicle,
- with a left side wing (36) and a right side wing (38), each consisting of a side frame (37, 39), which side frame (37, 39) is connected to the centre frame (14) so as to be swivelable about horizontal or spatially diagonally running axes of rotation, wherein soil-working implements (28) are mounted to each particular side frame (37, 39),
- with front support wheels (40) disposed at the particular front ends of the left side wing (36) and of the right side wing (38) so as to be swivelably movable in each case via a joint with swivel axes positioned approximately transverse to the driving direction (34),
- with rear rotating support devices (46) disposed at the particular rear ends of the left side wing (36) and of the right side wing (38) so as to be swivelably movable in each case via a joint (50) with swivel axes positioned approximately transverse to the driving direction (34),
**characterised in that** a frame section of the rear rotating support devices (46) assigned to the central part (12) and mounted there is configured such that it is coupleable by means of controllable coupling elements with a frame section of the particular rear rotating support devices (46) assigned to the left side wing (36) and/or assigned to the right side wing (38), wherein at least one actuator for the height adjustment and/or for the swivelling in relation to the particular side frame (37, 39) of each of the two side wings (36, 38) is in each case assigned to the support wheel (40) and/or to the rear rotating support device (46) of at least one side wing (36, 38).

2. The soil-working machine according to claim 1, in which rear rotating support devices (46) are assigned to the central part (12) and mounted there.

3. The soil-working machine according to claim 2, in which the particular rear rotating support devices (46) assigned to the left side wing (36) and/or assigned to the right side wing (38) are supported in the coupled state on the central part (12) and/or on a suspension of the rear rotating support devices (46), which are assigned to the central part (12) and mounted there.

4. The soil-working machine according to claim 2 or 3, in which the suspensions or holders of the rear rotating support devices (46), which are in each case coupleable with each other, are in each case bringable into engagement with each other by means of controllable coupling pins (58) or the like coupling elements.

5. The soil-working machine according to one of the claims 2 to 4, in which the rear rotating support devices (46) assigned to the central part (12) and mounted there are coupleable with the particular rear rotating support devices (46) assigned to the left side wing (36) and/or assigned to the right side wing (38) and are lockable in an alignment to each other that is approximately flush-aligned with their particular axes of rotation.

6. The soil-working machine according to one of the claims 1 to 5, in which the rotating rear support devices (46) are each formed by packer rollers (52), packer wheels, or the like.

7. The soil-working machine according to one of the claims 1 to 6, in which a swivelably movable suspension of each of the at least two support wheels (40) is connected via a coupling device with a swivelably movable suspension of the rear rotating support device (46) assigned to the particular side frame (37, 39), which coupling device transfers any swivel movements of the particular support wheel (40) induced by the particular actuator and/or by bumps in the ground and/or by load changes onto the rear rotating support device (46) and/or in reverse away therefrom onto the support wheel (40).

8. The soil-working machine according to claim 7, in which, with the rear support devices (46) of the centre frame (12) as well as of the left and right side wings (36, 38) being coupled, any swivel movements transferred from the particular support wheel (40) onto the rear rotating support device (46) and/or in reverse away therefrom onto the support wheel (40) are transferable across the entire machine width by means of the rear support devices (46), which are coupled with each other.

9. The soil-working machine according to one of the claims 1 to 8, in which the soil-working implements (28) are formed by coulter discs, cultivator tines, or the like.

## Revendications

1. Machine agricole de travail du sol (10) destinée au travail du sol et/ou à l'épandage de matériau d'épandage tel qu'engrais et/ou semences,
- dotée d'une partie médiane (12) composée au moins d'un châssis médian (14) et d'un dispositif de traction (16) relié à celui-ci à l'avant, destiné à être couplé à un engin de traction agricole ou à un véhicule tracteur équivalent,
- dotée d'une aile latérale gauche (36) et d'une aile latérale droite (38), chacune composée d'un châssis latéral (37, 39), ledit châssis latéral (37, 39) étant relié au châssis médian (14) de manière pivotante autour d'axes de rotation horizontaux ou obliques dans l'espace, des outils de travail du sol (28) étant montés sur le châssis latéral correspondant (37, 39),
- dotée de roues jockey (40) avant, chacune agencées de manière pivotante aux extrémités antérieures correspondantes de l'aile latérale gauche (36) et de l'aile latérale droite (38) par le biais d'un joint articulé à axes de pivotement approximativement obliques par rapport au sens de marche (34),
- dotée de dispositifs d'appui rotatifs arrière (46), chacun agencés de manière pivotante aux extrémités postérieures correspondantes de l'aile latérale gauche (36) et de l'aile latérale droite (38) par le biais d'un joint articulé (50) à axes de pivotement approximativement obliques par rapport au sens de marche (34),
**caractérisée en ce qu'**une partie du châssis desdits dispositifs d'appui rotatifs arrière (46) associés à et disposés sur la partie médiane (12) est réalisée de sorte qu'elle peut être couplée à une partie de châssis des dispositifs d'appuis rotatifs arrière (46) respectifs associés à l'aile latérale gauche (36) et/ou associés à l'aile latérale droite (38) au moyen d'éléments de couplage commandables, au moins un acteur respectif de réglage en hauteur et/ou de pivotement par rapport au châssis latéral (37, 39) correspondant de chacune des deux ailes latérales (36, 38) étant associé à la roue jockey (40) et/ou au dispositif d'appui rotatif arrière (46) au moins d'une aile latérale (36, 38).

2. Machine agricole de travail du sol selon la revendication 1, dans laquelle des dispositifs d'appui (46) rotatifs arrière sont associés à la partie médiane (12) et y sont disposés.

3. Machine agricole de travail du sol selon la revendication 2, dans laquelle lesdits dispositifs d'appui rotatifs arrières (46) respectifs associés à l'aile latérale gauche (36) et/ou associés à l'aile latérale droite (38) prennent appui, lorsqu'ils sont couplés, sur la partie médiane (12) et/ou sur une suspension des dispositifs d'appui rotatifs arrière associés à la partie médiane (12) et disposés sur celle-ci.

4. Machine agricole de travail du sol selon la revendication 2 ou 3, dans laquelle les suspensions ou fixations des dispositifs d'appui rotatifs arrière (46) respectivement susceptibles d'être couplés les uns aux autres peuvent venir en prise respective les unes avec les autres au moyen de boulons de couplage (58) commandables ou d'éléments de couplage équivalents.

5. Machine agricole de travail du sol selon l'une quelconque des revendications 2 à 4, dans laquelle les dispositifs d'appui rotatifs arrière (46) associés à et disposés sur la partie médiane (12) peuvent être couplés avec les dispositifs d'appui rotatifs arrière (46) respectifs associés à l'aile latérale gauche (36) et/ou associés à l'aile latérale droite (38) et être verrouillés les uns par rapport aux autres dans un alignement de leurs axes de rotation respectifs.

6. Machine agricole de travail du sol selon l'une quelconque des revendications 1 à 5, dans laquelle les dispositifs d'appui rotatifs arrière (46) sont chacun constitués de rouleaux de compactage (52), de roues de compactage ou équivalents.

7. Machine agricole de travail du sol selon l'une quelconque des revendications 1 à 6, dans laquelle une suspension pivotante de chacune desdites au moins deux roues jockey (40) est reliée par un dispositif de couplage à une suspension pivotante du dispositif d'appui rotatif arrière (46) associé au châssis latéral (37, 39) correspondant, lequel dispositif de couplage transmet tout mouvement de pivotement de la roue jockey (40) correspondante, induit par l'acteur correspondant et/ou par des aspérités du sol et/ou par des changements de contrainte, au dispositif d'appui rotatif arrière (46) et/ou, dans le sens inverse, de celui-ci à la roue jockey (40).

8. Machine agricole de travail du sol selon la revendication 7, dans laquelle, lorsque les dispositifs d'appui rotatifs arrière (46) du châssis médian (12) ainsi que des ailes latérales gauche et droite (36, 38) sont couplés, tout mouvement de pivotement transmis de la roue jockey (40) correspondante au dispositif d'appui rotatif arrière (46) et/ou dans le sens inverse de celui-ci à la roue jockey (40) est transmissible sur toute la largeur de l'outil au moyen des dispositifs d'appui rotatifs arrière (46) couplés les uns aux autres.

9. Machine agricole de travail du sol selon l'une quelconque des revendications 1 à 8, dans lequel les outils de travail du sol (28) sont constitués de disques, de dents d'émottage et équivalents.
